# EUROPÄISCHE PATENTSCHRIFT

(11) **EP 3 423 173 B1**
(45) Veröffentlichungstag und Bekanntmachung des Hinweises auf die Patenterteilung: **13.07.2022**
(21) Anmeldenummer: 17707896.1
(22) Anmeldetag: 01.03.2017
(51) Int. Cl.: D02G 1/14, B01D 67/00, B01D 69/08, B01D 63/02, B01D 61/24

(54) **HOHLFASERMEMBRAN MIT DREIDIMENSIONALER LOCKUNG**
HOLLOW FIBRE MEMBRANE HAVING THREE DIMENSIONAL TEXTURING
MEMBRANE DE FIBRES CREUSES DOTÉE D'UNE FRISURE TRIDIMENSIONNELLE

(30) Priorität: 01.03.2016 DE 102016002440
(43) Veröffentlichungstag der Anmeldung: 09.01.2019
(73) Patentinhaber: Fresenius Medical Care Deutschland GmbH, 61352 Bad Homburg (DE)
(72) Erfinder: LANG, Armin, 66636 Tholey (DE); BECHTEL, Dieter, 66540 Neunkirchen (DE)
(74) Vertreter: Ricker, Mathias
(86) Internationale Anmeldenummer: PCT/EP2017/054768
(87) Internationale Veröffentlichungsnummer: WO 2017/149011

(56) Entgegenhaltungen:
- JP-A- 2005 246 192
- JP-A- 2008 155 009
- JP-A- 2008 190 081
- US-A- 3 616 928

## Beschreibung

Die vorliegende Erfindung betrifft eine Hohlfasermembran mit dreidimensionaler Lockung, ein Verfahren zur Herstellung der Faser, ein Bündel umfassend die Fasern sowie eine Filtervorrichtung umfassend das Bündel. Die Filtervorrichtung ist vorzugsweise ein Hohlfaserdialysator für die Hämodialyse.

Hohlfaserdialysatoren weisen typischerweise ein Hohlfasermembranbündel auf, das in einem zylindrischen Filtergehäuse angeordnet ist. Bei der Dialyse fließt durch das Innere der Hohlfasermembranen Blut und im Raum zwischen Fasern und Filtergehäuse fließt das Dialysat im Gegenstrom zum Blut. Die Aufgabe eines Dialysators ist es den Stoffaustausch durch die Wand der Hohlfasern zu bewirken.

Es ist bekannt, zur Steigerung der Stoffaustauschleistung in Hohlfasern, die für die Hämodialyse verwendet werden, die Hohlfasern in Form gelockter Hohlfasern bereitzustellen.

WO 01/60477 betrifft eine Filtervorrichtung, vorzugsweise für die Hämodialyse, die aus einem zylindrischen Filtergehäuse und einem Bündel von gelockten (gekräuselten) Hohlfasern besteht.

EP 2 119 494 betrifft Hohlfasermembranen und ein Modul enthaltend die Hohlfasern. Die Hohlfasern weisen eine Lockung auf, wobei die Wellenlänge der Lockung 15 bis 25 mm beträgt.

EP 1 714 692 betrifft einen Dialysefilter, welcher gewellte Hohlfasern aufweist.

DE 28 51 687 betrifft hohle, semipermeable Fasern für die Verwendung bei Fluidtrennungen, wobei die Fasern eine Vielzahl von Wellen aufweisen. Da bei der dort beschriebenen Herstellung die Kräfte, die auf die hohlen Fasern ausgeübt werden, mit der Tiefe der hohlen Faser innerhalb des Bündels variieren, kommt es zur Ausbildung unregelmäßiger Wellen auf den hohlen Fasern, wobei die äußeren Anteile des Bündels eine geringere weiträumigere Kräuselung aufweisen als die hohlen Fasern, die im inneren Zentrum des Bündels angeordnet sind.

EP 0 116 155 betrifft ein Verfahren und eine Vorrichtung zur Herstellung von Fadenbündeln, wobei die Fäden eine Lockung (Wellung) aufweisen. Hierbei werden die Hohlfasern zick-zack förmig um in zwei Ebenen und in Abständen voneinander angeordnete runde Stäbe geführt, die mit derselben Geschwindigkeit wie die Hohlfasern kontinuierlich durch eine Fixierzone geführt werden. Die Fadenbündel können zur Stoff- und Wärmeübertragung verwendet werden, beispielsweise für die Blutdialyse. Dieses Dokument offenbart auch, dass ein Verfahren, welches das Hindurchführen eines Hohlfadens durch zwei kämmende aber sich nicht berührende Zahnräder vorsieht, zur Herstellung gelockter Hohlfasern technisch nachteilig sein kann.

Angesichts der anhaltenden Nachfrage nach neuen Hohlfasermembranen, welche für die Hämodialyse geeignet sind, war es Aufgabe der vorliegenden Erfindung eine Hohlfasermembran mit verbesserten Eigenschaften bereitzustellen.

Diese Aufgabe konnte mit einer Hohlfasermembran wie in Anspruch 1 definiert gelöst. Bevorzugte Ausführungsformen sind in den davon abhängigen Ansprüchen definiert. Die nebengeordneten Ansprüche definieren weitere Aspekte der Erfindung unter Verwendung der Hohlfasermembran.

Die im Folgenden verwendeten Begriffe in Anführungs- und Schlusszeichen sind im Sinne der Erfindung definiert.

In einem ***ersten Aspekt*** betrifft die Erfindung eine Hohlfasermembran erhalten nach einem Verfahren gemäß Anspruch 1 aufweisend zumindest eine erste Lockung in Form einer ersten Welle, welche durch eine erste Schwingungsebene und eine erste Wellenlänge gekennzeichnet ist, und eine zweite Lockung in Form einer zweiten Welle, die durch eine zweite Schwingungsebene und eine zweite Wellenlänge gekennzeichnet ist, dadurch gekennzeichnet, dass die erste Schwingungsebene und die zweite Schwingungsebene einen Winkel einschließen, welcher 70 bis 110° beträgt, wobei die erste Lockung und die zweite Lockung entlang der Länge der Hohlfasermembran aus periodischen Wellenformen bestehen und wobei die erste und die zweite Wellenlänge unterschiedlich voneinander sind.

Der Begriff "*Hohlfasermembran*" bezeichnet eine hohle Faser mit membranartigen Wandungen aus einem organischen Material. Derartige Hohlfasermembranen sind aus dem Stand der Technik bekannt und können nach bekannten Verfahren hergestellt werden, beispielsweise durch Spinnverfahren.

Eine beispielhafte Ausführungsform einer geeigneten Hohlfasermembran besteht aus 90 bis 99 Gewichtsprozent eines hydrophoben ersten Polymers und 10 bis 1 Gewichtsprozent eines hydrophilen zweiten Polymers. Dabei werden die hydrophoben ersten Polymere z.B. aus folgender Gruppe ausgewählt: Polyarylsulfone, Polycarbonate, Polyamide, Polyvinylchlorid, modifizierte Acrylsäure, Polyether, Polyurethane oder deren Copolymere. Die hydrophilen zweiten Polymere werden z.B. aus folgender Gruppe ausgewählt: Polyvinylpyrrolidon, Polyethylenglycol, Polyglycolmonoester, Copolymere von Polyethylenglycol mit Polypropylenglycol, wasserlösliche Derivate der Zellulose oder Polysorbate. In einer bevorzugten Ausführung umfasst die Faser die Materialien Polysulfon und Polyvinylpyrolidon.

Der Begriff "*Lockung*" bedeutet, dass die Faser entlang ihrer Länge nicht vollständig gerade ist sondern Abweichungen von der Geraden aufweist. Der Begriff "Lockung" bedeutet einen Sammelbegriff für Begriffe wie *"Ondulierung",* "*Kräuselung*", "*Wellung*", "*Welle*" oder "*Textur*", welche im Stand der Technik verwendet werden.

Im Folgenden wird der Begriff "*Lockung*" anhand des Begriffs "*Welle*" definiert. Somit umfasst der Begriff "*Lockung*" eine Welle bzw. eine periodische Welle oder ist mit einer Welle oder einer periodischen Welle gleichzusetzen, d.h. die Lockung liegt in Form einer Welle vor.

Im physikalischen Sinn stellt eine periodische Welle eine sich räumlich ausbreitende Schwingung einer ort- und zeitabhängigen physikalischen Größe dar, die zumindest durch eine Schwingungsebene und eine Wellenlänge gekennzeichnet.

Erfindungsgemäß weist die Hohlfasermembran mindestens zwei verschiedene Lockungen auf, wobei jede der Lockungen - da sie aus Wellen bestehen - jeweils durch eine Schwingungsebene und eine Wellenlänge beschrieben werden können.

Somit ist die erste Lockung in Form einer ersten Welle durch eine erste Schwingungsebene und eine erste Wellenlänge gekennzeichnet, und die zweite Lockung in Form einer zweiten Welle durch eine zweite Schwingungsebene und eine zweite Wellenlänge gekennzeichnet.

Erfindungsgemäß schließen die erste Schwingungsebene und die zweite Schwingungsebene einen Winkel miteinander ein 70 bis 110° beträgt.

In einer weiteren Ausführungsform beträgt der Winkel 85 bis 95°.

In einer weiteren Ausführungsform beträgt der Winkel 90°, d.h. die Schwingungsebenen stehen senkrecht aufeinander. Diese Ausführungsform ist bevorzugt, da eine derartige Anordnung eine besonders gute mechanische Stabilität aufweisen kann.

In einer weiteren Ausführungsform kann eine erfindungsgemäße Hohlfasermembran auch verschiedene Winkel zwischen den zumindest zwei Schwingungsebenen aufweisen.

Erfindungsgemäß sind die Wellenlängen der ersten und der zweiten Welle verschieden voneinander.

Vorzugsweise beträgt die Wellenlänge der ersten Welle in einer Ausführungsform 3 bis 15 mm. In einer weiteren Ausführungsform beträgt die Wellenlänge der ersten Welle 4 bis 10 mm. In einer weiteren Ausführungsform beträgt die Wellenlänge der ersten Welle 6 bis 8 mm.

Vorzugsweise beträgt die Wellenlänge der zweiten Welle 20 bis 50 mm. In einer weiteren Ausführungsform beträgt die Wellenlänge der zweiten Welle 25 bis 40 mm. In einer weiteren Ausführungsform beträgt die Wellenlänge der zweiten Welle 25 bis 35 mm.

In einer Ausführungsform beträgt die Wellenlänge der ersten Welle 3 bis 15 mm und die Wellenlänge der zweiten Welle im Bereich von 20 bis 50 mm.

In einer weiteren Ausführungsform beträgt die Wellenlänge der ersten Welle 4 bis 10 mm und die Wellenlänge der zweiten Welle 25 bis 40 mm.

In einer weiteren Ausführungsform beträgt die Wellenlänge der ersten Welle 6 bis 8 mm und die Wellenlänge der zweiten Welle 25 bis 35 mm.

Außer durch Schwingungsebene und Wellenlänge kann eine Welle auch durch eine Amplitude gekennzeichnet sein.

In einer Ausführungsform weist die erste Amplitude einen Wert von 0,2 bis 0,6 mm liegt. In einer weiteren Ausführungsform beträgt die erste Amplitude 0,3 bis 0,5 mm.

In einer Ausführungsform weist die zweite Amplitude einen Wert von 2,0 bis 6,0 mm auf. In einer weiteren Ausführungsform beträgt die zweite Amplitude 2,5 bis 4,5 mm.

In einer Ausführungsform beträgt die erste Amplitude 0,2 bis 0,6 mm und die zweite Amplitude 2,0 bis 6 mm.

In einer weiteren Ausführungsform beträgt die erste Amplitude 0,3 bis 0,5 mm und die zweite Amplitude 2,5 bis 4,5 mm.

In bestimmten Ausführungsformen ist die Hohlfasermembran durch eine Kombination von erster Wellenlänge und deren Amplitude, zweiter Wellenlänge und deren Amplitude und dem Winkel der Schwingungsebenen von erster und zweiter Welle zueinander gekennzeichnet.

In einer Ausführung beträgt die Wellenlänge der ersten Hohlfasermembran 3 bis 15 mm, deren Amplitude beträgt 0,2 bis 0,6 mm, die Wellenlänge der zweiten Welle beträgt 20 bis 50 mm und deren Amplitude im Bereich von 2 bis 6 mm und der durch die Schwingungsebenen der Wellen eingeschlossene Winkel beträgt 70° bis 110°

In einer anderen Ausführungsform beträgt die Wellenlänge der ersten Welle der Hohlfasermembran 6 bis 8 mm, deren Amplitude 0,2 bis 0,6 mm, die Wellenlänge der zweiten Welle 25 - 35 mm und deren Amplitude 2 bis 6 mm und der durch die Schwingungsebenen der Wellen eingeschlossene Winkel beträgt 80° bis 100°.

In einer weiteren Ausführung beträgt die erste Wellenlänge der Faser 7 mm, deren Amplitude 0,4 mm. Die zweite Wellenlänge beträgt 30 mm und deren Amplitude 3,5 mm. Die Schwingungsebenen der ersten und der zweitem Welle nehmen einen Winkel von 90° ein.

Erfindungsgemäß bestehen die erste Lockung und die zweite Lockung aus periodischen Wellenformen.

Typische periodische Wellenformen sind eine Dreieckschwingung, eine Sägezahnschwingung, eine Rechteckschwingung oder eine Sinusschwingung (sinusoide Schwingung) oder Überlagerungen von zwei oder mehr dieser Schwingungen.

In einer Ausführungsform sind sowohl die erste Welle und die zweite Welle sinusförmig (sinusoid).

Die Hohlfasermembranen der vorliegenden Erfindung weisen im Vergleich zu Hohlfasermembranen mit lediglich einfacher Lockung eine verbesserte mechanische Festigkeit auf, beispielsweise gegen Verdrillung. Als Konsequenz lassen sie sich besser verarbeiten. Beispielsweise liefern sie beim Schneiden sauberere Schnittkanten, was zu einem geringeren Ausschuss führt.

In einem zweiten Aspekt wird eine Hohlfasermembran bereitgestellt, die derartig ausgebildet ist, dass ein daraus hergestelltes Hohlfasermembranbündel eine möglichst hohe Ausformkraft von 3,4 bis 10 N aufweist, wenn das Bündel in das zylindrische Gehäuse eines Hohlfasermembranfilters für die Dialyse eingeformt wird.

Das resultierende Hohlfasermembranbündel weist eine Ausformkraft von 3,4 bis 10 N an einem daraus hergestellten Hohlfasermembranbündel mit 16896 Fasern auf, wenn das Hohlfasermembranbündel aus einer zylindrischen Hülse mit einem Durchmesser von 41,4 mm entformt wird. Bevorzugt sind im zweiten Aspekt der Erfindung Hohlfasermembranen, die eine Ausformkraft von 3,4 bis 7 N bewirken, weiter bevorzugt sind solche Hohlfasermembranen, die eine Ausformkraft von 3,6 bis 5 N bewirken. In einer Ausführungsform besitzt die Hohlfasermembran einen Faserdurchmesser von 170 bis 210 µm.

Üblicherweise ist ein Hohlfasermembranbündel in radialer Richtung komprimierbar und wird bei der Herstellung von Hohlfasermembranfiltern unter radialer Kompression in das zylindrische Gehäuse des zylindrischen Filtergehäuses eingebracht. Die Rückstellkraft eines Hohlfasermembranbündels stellt dabei das Bestreben des Bündels da, in eine entspannte Form über zu gehen.

Je stärker die Rückstellkraft des Hohlfasermembranbündels ist, desto größer ist auch die Ausformkraft, die notwendig ist, um das Hohlfasermembranbündel aus dem Zylinder herauszuziehen.

Letztendlich ist das Rückstellvermögen des Hohlfasermembranbündels über die Lockung der Fasern einstellbar. Je nach Wellenlänge und Amplituden der Lockungen kann ein mehr oder weniger starkes Rückstellvermögen des Hohlfasermembranbündels, korrelierend mit einer mehr oder weniger starken Ausformkraft bewirkt werden.

Im zweiten Aspekt wurde gefunden, dass Bündel deren Ausformkraft durch die Art der Lockung erhöht ist, im Herstellprozess von Hohlfasermembranfilter besser handhabbar sind, da sie eine höher mechanische Stabilität aufweisen und zu weniger Produktionsausschuss führen. Die höhere mechanische Stabilität resultiert aus einer stärkeren gegenseitigen Abstützung der Fasern im Hohlfasermembranbündel. Im Produktionsprozess von Hohlfasermembranfiltern wurde daher beobachtet, dass es zu weniger Faserbrüchen kommt.

In einem ***dritten Aspekt*** betrifft die Erfindung ein Verfahren zur Herstellung der erfindungsgemäßen Hohlfasermembran. Das Verfahren weist zumindest die Schritte (a) und (b) auf:
(a) Bereitstellen einer Hohlfasermembran, welche eine erste Lockung in Form einer ersten Welle aufweist, welche durch eine erste Schwingungsebene und eine erste Wellenlänge gekennzeichnet ist;
(b) Aufbringen einer zweiten Lockung auf die in Stufe (a) bereitgestellte Hohlfasermembran in Form einer zweiten Welle, welche durch eine zweite Schwingungsebene und eine zweite Wellenlänge gekennzeichnet ist;
wobei das Aufbringen der Stufe (b) so erfolgt, dass nach dem Aufbringen die erste Schwingungsebene und die zweite Schwingungsebene einen Winkel einschließen, welcher70 bis 110° beträgt, wobei die erste und die zweite Wellenlänge so ausgewählt werden, dass die erste Wellenlänge kürzer als die zweite Wellenlänge ist und wobei in Stufe (b) die Hohlfasermembran der Stufe (a) durch mindestens zwei sich gegenläufig drehende Zahnräder hindurchgeführt wird, wobei die Drehachsen der Zahnräder nicht senkrecht zur ersten Schwingungsebene ausgerichtet sind.

In einer Ausführungsform wird die Wellenlängen so ausgewählt, dass die erste Wellenlänge kürzer als die zweite Wellenlänge ist.

In Stufe (a) kann eine gelockte Faser bereitgestellt werden, wie sie aus dem Stand der Technik bekannt ist. Die gelockte Faser kann auch nach Verfahren hergestellt werden, die aus dem Stand der Technik bekannt sind.

In einer Ausführungsform wird dabei die Lockung der in Stufe (a) bereitgestellten Hohlfasermembran dadurch erzeugt, dass eine Hohlfasermembran ohne Lockung durch mindestens zwei sich gegenläufig drehende Zahnräder hindurchgeführt wird. Die Form der Zähne der Zahnräder, die Abstände benachbarter Zähne voneinander sowie die Höhe der Zähne werden dabei so ausgewählt, dass die gewünschte Wellenform der ersten Welle, die gewünschte erste Wellenlänge und die gewünschte erste Amplitude eingestellt werden.

In Stufe (b) wird nun auf diese gelockte Faser, die in Stufe (a) bereitgestellt wurde, eine weitere Lockung aufgebracht.

Vorzugsweise wird dabei in Stufe (b) die Hohlfasermembran der Stufe (a) durch mindestens zwei sich gegenläufig drehende Zahnräder geführt. Dabei sind die

Drehachsen der Zahnräder nicht senkrecht zur ersten Schwingungsebene der in Stufe (a) bereitgestellten Hohlfasermembran ausgerichtet, d.h. vorzugsweise sind die Lockenwicklerzahnräder parallel zueinander angeordnet.

Überraschenderweise wurde gefunden, dass bei paralleler Anordnung der Lockenwicklerzahnräder der ersten und zweiten Stufe die Schwingungsebene einer wellengeprägten Hohlfasermembran nach einer ersten Stufe der Wellenprägung eine Drehung vollzieht, wenn sie in den Lockenwickler der zweiten Stufe eingezogen wird. In einer solchen Anordnung vollzieht die Schwingungsebene der Hohlfasermembran nach der ersten Stufe eine 90°C Drehung, um in die zweite Stufe eingezogen zu werden. Dieser Effekt ist umso ausgeprägter, je kürzer die in der ersten Stufe generierte Wellenlänge ist.

Die Form der Zähne der Zahnräder, die Abstände benachbarter Zähne und die Höhe der Zähne werden dabei so ausgewählt, dass die gewünschte Wellenform der zweiten Welle sowie die gewünschte zweite Wellenlänge und die gewünschte zweite Amplitude eingestellt werden.

Selbstverständlich kann auch eine Einstellung gewählt werden derart, dass Winkel gebildet werden, welche von einem Winkel von 0° abweichen. Auch eine Anordnung mit einem Winkel von 90° ist möglich.

Weiter erfindungsgemäß werden die Wellenlängen der ersten und der zweiten Welle vorzugsweise so ausgewählt, dass die erste Wellenlänge kürzer als die zweite Wellenlänge ist.

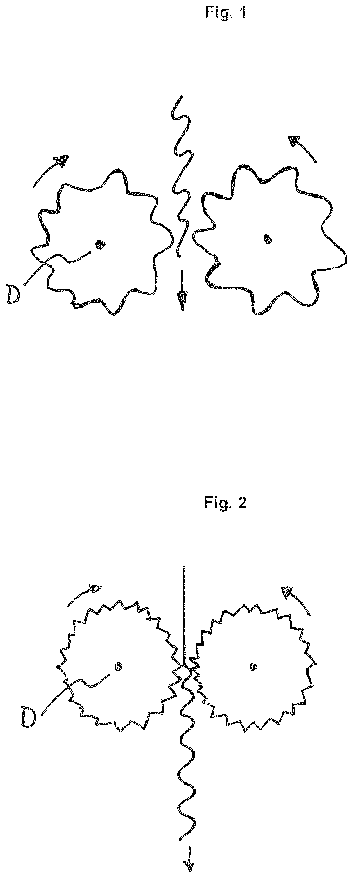

**Fig. 1** zeigt schematisch ein Verfahren zur Herstellung der erfindungsgemäßen Hohlfasermembranen. Hierbei wird eine Hohlfasermembran, welche eine erste Lockung in Form einer ersten Welle aufweist, welche durch eine erste Schwingungsebene und eine erste Wellenlänge gekennzeichnet ist, durch mindestens zwei sich gegenläufig drehende Zahnräder geführt (in Pfeilrichtung), wobei die Drehachsen D der Zahnräder nicht senkrecht zur ersten Schwingungsebene ausgerichtet sind sondern parallel. Dabei wird auf die Hohlfasermembran eine zweite Lockung aufgebracht, welche durch eine zweite Schwingungsebene und eine zweite Wellenlänge gekennzeichnet ist. Dabei erfolgt das Aufbringen der Stufe (b) so, dass nach dem Aufbringen die erste Schwingungsebene und die zweite Schwingungsebene einen Winkel miteinander einschließen, welcher 70 bis 110^{°} beträgt.

In der Figur 1 soll der Winkel ca. 90° betragen. Die Wellenlängen werden so ausgewählt, dass die erste Wellenlänge kürzer als die zweite Wellenlänge ist. Für das Aufbringen einer Lockung kann die Hohlfasermembran in einer Form zur Verfügung gestellt werden, wie sie im Stand der Technik beschrieben ist, also beispielsweise plastifiziert durch Lösemittel. Die Wellen können dann dadurch fixiert werden indem das Lösungsmittel verdampft wird.

Andererseits ist es auch möglich, die zum Aufbringen der Lockung verwendeten Zahnräder zu beheizen, so dass die Hohlfasermembran thermisch verformt wird.

**Fig. 2** zeigt schematisch die Herstellung einer Hohlfasermembran, welche in Stufe (a) bereitgestellt wird, wobei die Lockung dieser Faser dadurch hergestellt wird, dass eine im Wesentlichen lineare Hohlfasermembran durch zwei sich gegenläufig drehende Zahnräder hindurchgeführt wird (in Pfeilrichtung). Die Drehachsen stehen hier senkrecht zur Schwingungsebene der gebildeten gelockten Hohlfasermembran, welche die erste Lockung in Form einer ersten Welle aufweist, welche durch eine erste Schwingungsebene und eine erste Wellenlänge gekennzeichnet ist.

Wie in den **Fig. 1** und **2** schematisch dargestellt, lassen sich die Wellenlängen der ersten und der zweiten Lockung, wobei die der zweiten Lockung größer sein muss als die der ersten Lockung, durch die Form der Zähne der Zahnräder, den Abstand benachbarter Zähne voneinander und auch der Höhe der Zähne einstellen.

Die Hohlfasermembanen der vorliegenden Erfindung können nach bekannten Verfahren zu einem Bündel verarbeitet werden. Diese bekannten Verfahren sehen beispielsweise das Zurechtschneiden der Hohlfasermembranen auf eine bestimmte Länge vor. Die Hohlfasermembranen können dann zu einem Bündel geformt werde, wobei die Enden der Fasern mit geeigneten Harzen wie Polyurethanen zur Fixierung vergossen werden. Die Herstellung des Hohlfasermembranfadens an sich kann nach einem bekannten Spinnverfahren unter Phaseninversion erfolgen. Im Folgenden werden typische Bereichsparameter für einen Spinnprozess einer Hohlfasermembran angegeben. Diese Bedingungen führen zu den Hohlfasermembranen gemäß der vorliegenden Erfindung, sind jedoch nicht einschränkend zu verstehen.

Die nachfolgenden "%" Angaben sind allesamt Gewichtsprozent-Angaben.

Hierzu wird eine Spinnmasse beispielsweise bestehend aus 16 bis 18 % Polysulfon, 3 bis 6 % Polyvinylpyrrolidon und 76 bis 81% Dimethylacetamid vorbereitet und auf 30 bis 60 °C temperiert. Die Spinnmasse wird zusammen mit einem Fällmittel bestehend aus 25-40% Wasser und 60-75% Dimethylacetamid durch eine entsprechende Ringdüse extrudiert. Die Spinnmasse wird dabei durch einen Ringspalt zusammen mit dem Fällmittel, das durch eine zentrale kreisförmige Öffnung der Spinndüse austritt, extrudiert. Der Ringspalt kann eine typische Spaltweite von 30 bis 50 µm und einen inneren Durchmesser von 150 bis 300 µm aufweisen.

Der so erhaltene Spinnfaden kann durch einen Luftspalt mit relativem Feuchtewert von 40 bis 100%, vorzugsweise 80 bis 100% und einer Länge von 100 bis 800 mm, vorzugsweise 200 bis 600 mm, geführt werden. Anschließend wird der Spinnfaden in ein auf beispielsweise 60 bis 80°C temperiertes Fällbad aus Wasser eingeleitet und koaguliert. Die so erhaltene Hohlfasermembran wird mit Wasser bei Temperaturen von 60°C bis 90°C gespült. Anschließend wird die Hohlfasermembran bei Temperaturen von 100 bis 150°C für 1 bis 10 Minuten getrocknet.

Der Durchmesser der so erhaltenen Hohlfasermembran und die Wandstärke der Membran können über die Extrusionsrate der Spinnmasse und des inneren Fällmittels angepasst werden. Typische Lumenweite so erhaltener Hohlfasermembranen liegen zwischen 150 und 350 µm. Typische Wandstärken solcher Hohlfasermembranen können 30 bis 50 µm betragen.

Im Anschluss an das beschriebene Spinnverfahren werden die erste und die zweite Lockung durch die entsprechenden Lockenwickler auf die Hohlfasermembran aufgeprägt.

Maßgeblich ist anscheinend, dass die erste Wellenprägung die wellenförmige Hohlfasermembran in der Schwingungsebene der Welle soweit aussteift, dass beim Übergang in die 2. Lockenwicklerstufe ein Umklappen der wellenförmigen Hohlfasermembran erfolgt.

Es hat sich gezeigt, dass die Ausrichtung der beiden Schwingungsebenen von den Wellenlängen der ersten und der zweiten Welle zueinander abhängen kann. Erfindungsgemäß wird auch eine Drehung der Schwingungsebene gefunden, die Winkelwerte von 70° bis 110° annehmen können.

Somit betrifft die Erfindung in einem ***vierten Aspekt*** ein Bündel aufweisend Hohlfasermembranen wie im ***ersten Aspekt*** definiert.

Die Hohlfasern der vorliegenden Erfindung können für Filtrationszwecke eingesetzt werden. Dazu werden sie typischerweise in einem Gehäuse angeordnet, vorzugsweise in Form eines Bündels.

Insbesondere zeigen Hohlfasermembranbündel aus Hohlfasermembranen wie im ersten Aspekt definiert, eine stärkere Vorspannung als herkömmliche Hohlfasermembranbündel bestehend aus geraden bzw. einfach wellengeprägten Hohlfasermembranen. Der Begriff "Vorspannung" bezeichnet ein Maß für eine Rückstellkraft die ein Bündel aufweist, wenn es komprimiert wird. Fasern, wie im ersten Aspekt definiert, sind bestrebt einen größeren Raum im Hohlfaserbündel einzunehmen, als herkömmliche gerade oder einfach gewellteHohlfasermembranen. Bei gleicher Faseranzahl und gleichen Gehäusedimensionen bedarf es damit einer höheren Kraft um die Hohlfasermembranen in ein zylindrisches Gehäuse eines Filtermoduls auszuformen, als dies bei einfach wellengeprägten Hohlfasermembranen der Fall ist. Hierbei versteht man unter Ausformen das Herausschieben oder -ziehen eines Hohlfaserbündels aus der das Hohlfasermembranbündel umgebenden zylindrischen Umfassung, z.B. einem Dialysatorgehäuse, oder einer Umschlagfolie.

Hohlfasermembranbündel mit derart erhöhter Vorspannung, die nach den derzeit üblichen Bündelungsverfahren in Bündelabschnitte geschnitten werden, zeigen den Vorteil gleichmäßig geschnittener Schnittkanten auf, als dies bei Schnittkanten einfach wellengeprägter Hohlfasermembranbündeln beobachtet wird. Insbesondere beim Vergießen der Faserenden mit einer Vergussmasse kommt dies zum Tragen. Ein typisches Verfahren zum Vergießen der Faserenden von Hohlfasermembranbündeln wird beispielsweise in der DE 10 2006 021 066 A1 beschrieben. Demnach wird beim Vergießen der Faserenden eines Hohlfasermembranbündels beispielsweise ein flüssiges Polyurethan Präpolymer verwendet. Bei derartigen Prozessen dringt die Vergussmasse in den Endbereich des Hohlfasermembranbündels ein und fixiert nach Aushärten des Präpolymeren die Faserenden in ihrer Position. Dies führt zu sogenannten "Vergusskeilen". Nachteilig ist, dass ein Teil der Hohlfasermembranen aus ihrer Lage verschoben wird. Dies kann in der weiteren Herstellung zu unbrauchbaren Filtermodulen führen. Es wurde beobachtet, dass die Bildung solcher Vergusskeile abnimmt, wenn die Schnittkante des Hohlfasermembranbündels gleichmäßiger hergestellt werden kann.

Ein weiterer positiver Effekt der erfindungsgemäßen zweifachen Lockung der Hohlfasermembran besteht in einer gleichmäßigeren Verteilung der Hohlfasermembranen innerhalb des Hohlfasermembranbündels. Durch eine gleichmäßigere Beabstandung der Hohlfasermembranen neigen die Fasern im Hohlfaserbündel weniger dazu sich zu sogenannten Strähnen zusammenzulegen. In Zonen dieser Strähnen sind einzelne Fasern unter Filtrationsbedingungen nicht frei anspülbar. Die Strähnenbildung geht dann immer einher mit einer Verringerung der Filtrationsleistung des Filtermoduls. Im vorliegenden Fall konnte durch die erfindungsgemäße zweifache Lockung und die damit verbundene gleichmäßigere Faserverteilung eine Verbesserung der Filtration erreicht werden.

Somit betrifft die Erfindung in einem ***fünften Aspekt*** eine Filtervorrichtung aufweisend ein Gehäuse und einem in diesem Gehäuse angeordneten Bündel wie im ***vierten Aspekt*** definiert.

Vorzugsweise ist die Filtervorrichtung ein Hohlfaserdialysator für die Hämodialyse.

Ganz allgemein kann jedoch die Hohlfasermembran wie im ***ersten Aspekt oder zweiten Aspekt*** definiert oder die Hohlfasermembran hergestellt nach einem Verfahren wie im ***dritten Aspekt*** definiert oder das Bündel wie im ***vierten Aspekt*** definiert oder die Filtervorrichtung wie im ***fünften Aspekt*** definiert nicht nur für die Dialyse von Blut sondern für jegliche Fluidtrennung verwendet werden.

Demzufolge betrifft in einem ***sechsten Aspekt*** die Erfindung auch die Verwendung einer Hohlfasermembran wie im ***ersten Aspekt*** oder die Verwendung eines Bündels wie im ***vierten***

***Aspekt*** definiert, oder die Verwendung einer Filtervorrichtung wie im ***fünften Aspekt*** definiert, für die Fluidtrennung.

### BEISPIELE

Als Maß der Filtrationsleistung von Dialysatoren diente der sogenannte Clearance Wert, der wie nachfolgend beschrieben bestimmt wurde. Clearancewerte erfindungsgemäßer Hohlfasermembranbündel wurden unter Vorgaben der DIN EN ISO 8637 Norm gemessen. Dabei wurde jeweils die Eingangs- und Ausgangskonzentration einer bestimmten Leitsubstanz während einer simulierten Dialyse an einem Dialysator, der aus Hohlfaserbündel aufgebaut ist gemessen und die Clearance entsprechend der Formel berechnet:

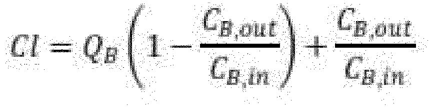

| | | |
|---|---|---|
| Cl | Clearance | [ml/min] |
| Q_{B} | Flussrate auf Blutseite | [ml/min] |
| Q_{F} | Filtratfluss | [ml/min] |
| C_{B,in} | Eingangskonzentration Blutseite | |
| C_{B,out} | Ausgangskonzentration Blutseite | |

Insgesamt wurden an 10 Filtermodulen die Clearancewerte bestimmt und die erhaltenen Werte gemittelt.

Die Clearancemessung wurde wie folgt durchgeführt: Ein Diaysator wurde durch Einformen des zu untersuchenden Hohlfasermembranbündels hergestellt, indem die Faserenden endseitig in dem Gehäuse des Dialysators vergossen werden. Der endseitige Verguss trennte den Dialysator in zwei Strömungsräume, einen blutseitigen Strömungsraum, der die Hohlräume der Fasern umfasst und einen dialysatseitigen Strömungsraum, der den die Fasern umgebenden Raum umfasst.

Der Dialysator weist blutseitig einen Zuführport und Auslassport auf, um Flüssigkeit in das Faserinnere einzuleiten und am anderen Ende der Fasern auszuleiten. Weiterhin weist der Dialysator dialysatseitig einen Zuführport und einen Auslassport auf, um dialysatseitig Flüssigkeit entlang der Fasern strömen zu lassen.

Zur Durchführung der Clearancemessung wurde die Dialysatseite mit einer 1%igen wässrigen Kaliumchloridlösung bei 37°C mit einer Flussrate von 500ml/min durchspült. Die Blutseite wurde mit der auf 37°C temperierten Prüfflüssigkeit mit einer Flussrate von 300 ml/min durchströmt.

Im Falle der Messung der Natrium Clearance wurde als Testflüssigkeit ein 154 mmol/l Natriumchloridlösung verwendet. Im Falle der Messung der Vitamin B12 Clearance wurde eine 36,07 µmol/l Testlösung verwendet. Nach 10 minütigem Durchströmen der beiden Strömungsseiten mit den jeweiligen Flüssigkeiten wurde die Konzentration des Analyten am Ausgang der Blutseite und am Ausgang der Dialysatseite bestimmt.

Zur Messung der Ausformkraft dient ein Hohlfasermembranbündel, das in eine HDPE Folie eingeschlagen wird als Prüfkörper. Das in die Folie eingefasste Hohlfasermembranbündel nimmt dabei eine zylindrische Form an.

Das Hohlfasermembranbündel wird anschließend aus dem Folienumschlag herausgeschoben, so dass das Hohlfaserbündel den Folienumschlag um 2cm frei überragt. Mit Hilfe eines Klebestreifens wird das freie Bündelende umwickelt und an einer Aufnahmeeinheit eines Zugmessgerätes fixiert. Das so eingefasste Bündelende weist dann denselben Durchmesser auf, wie das in die Folie eingeschlagene Bündel. Das auf diese Weise vorbereitete Hohlfasermembranbündel wird waagerecht auf einem Prüftisch positioniert. Die Folie wird mit entsprechenden Haltvorrichtungen fixiert.

Mit Hilfe des Zugmessgerätes wurde das Hohlfasermembranbündel aus der Folienhülse herausgezogen. Die Zuggeschwindigkeit betrug 1 cm/sec. Nachdem 50% der Länge des Faserbündels aus der Folienhülse herausgezogen worden waren, wurde der Kraftwert des Entformungsvorgangs am Zugmessgerät aufgenommen. Der so gemessene Kraftwert gab die Ausformkraft des Faserbündels an.

### Beispiel 1

In ein handelsübliches F60S Filtergehäuse der Firma Fresenius Medical Care wurde ein erfindungsgemäßes Hohlfasermembranbündel mit zweifacher Lockung eingeformt. Spezifikationen zu Faseranzahl, aktiver Membranfläche, Faserdurchmesser, Wandstärke der Hohlfasermembran und Länge der Hohlfasermembran im Dialysatorgehäuse sind in Tabelle 1 gezeigt. Die Hohlfasermembranen des erfindungsgemäßen Hohlfasermembranbündels wiesen eine erste Lockung mit einer Wellenlänge von 3 mm und eine zweite Lockung mit einer Wellenlänge von 30 mm auf. Die Schwingungsebene der beiden Lockungen standen in einem 90° Winkel zueinander.

Die Clearance Werte für Natrium und Vitamin B12 wurden nach der vorab beschriebenen Methode bestimmt. Die Natrium Clearance betrug 253 ml/min. Die Vitamin B12 Clearance betrug 135 ml/min

### Vergleichsbeispiel 1

Hohlfasermembranen des Vergleichsbeispiels wurden nach demselben Spinnverfahren erhalten, wie die Hohlfasermembranen des Ausführungsbeispiels. Faserdimensionen und Porenstruktur waren daher mit denen der Fasern des Ausführungsbeispiels identisch. Die Hohlfasermembranen des Ausführungsbeispiels wurden im Anschluss mit einer einfachen Lockung mit einer Wellenlänge von 30 mm versehen. Die Hohlfasermembranen wurden zu Bündeln zusammengefasst und nach demselben Verfahren wie in Beispiel 1 in ein handelsübliches F60S Filtergehäuse der Firma Fresenius Medical Care eingeformt und vergossen.

Die Clearance Werte für Natrium und Vitamin B12 wurden nach der vorab beschriebenen Methode bestimmt. Die Natrium Clearance betrug 238 ml/min. Die Vitamin B12 Clearance betrug 127 ml/min

**Tabelle 1**

| | Beispiel 1 | Vergleichsbeispiel 1 |
|---|---|---|
| Gehäuse Innendurchmesser | 39 mm | 39 mm |
| Anzahl der Hohlfasermembranen | 9216 | 9216 |
| Innendurchmesser der Hohlfasermembranen | 200 µm | 200 µm |
| Wandstärke | 40 µm | 40 µm |
| Länge der Hohlfasermembranen im Filtermodul | 227 mm | 227 mm |
| aktive Membranfläche | 1,31 m² | 1,31 m² |
| 1. Lockung Wellenlänge | 7 mm | - |
| Amplitude 1.Wellenlänge | 0,4 mm | - |
| 2. Lockung Wellenlänge | 30 mm | 30 mm |
| Amplitude 2.Wellenlänge | 3,5 mm | 3,5 mm |
| Natrium Clearance | 253 ml/min | 238 ml/min |
| Vit. B12 Clearance | 135 ml/min | 127 ml/min |

### Beispiel 2

Zur Messung der Ausformkraft wurden Hohlfasermembranbündel bestehend aus 16896 Hohlfasermembranen mit 280 mm Länge hergestellt. Der Faserinnendurchmesser der Fasern betrug 183 µm und die Wandstärke der Fasern betrug 38 µm. Die Hohlfasermembranen wurden in eine HDPE Folie zu einem zylindrischen Hohlfasermembranbündel mit 41,4 mm Durchmesser eingefasst. Die Ausformkraft wurde nach der vorab beschriebenen Methode bestimmt. Die Ausformkraft wurde an jeweils 30 Hohlfasermembranbündelmit der erfindungsgemäßen zweifachen Lockung mit einer ersten Wellenlänge von 7 mm und einer Amplitude von 0,4 mm und einer zweiten Wellenlänge mit von 30 mm mit einer Amplitude von 3,5 mm gemessen.

Zum Vergleich wurde die Ausformkraft an 30 Hohlfasermembranbündel gemessen, die sich von den erfindungsgemäßen Faserbündeln nur durch die Art der Lockung unterschied. Die Hohlfasermembranen wiesen eine einfache Lockung mit einer Wellenlänge von 30 mm und einer Amplitude von 3,5 mm auf.

Aus 30 Messungen wurde für die erfindungsgemäßen Hohlfasermembranbündel eine gemittelte Ausformkraft von 4,2 N gefunden. Für die Hohlfasermembranbündel mit den einfach gelockten Hohlfasermembranen wurde eine gemittelte Ausformkraft von 3,4 N für Faserbündel gefunden.

## Patentansprüche

1. Verfahren zur Herstellung einer Hohlfasermembran, aufweisend zumindest die Schritte (a) und (b):
(a) Bereitstellen einer Hohlfasermembran, welche eine erste Lockung in Form einer ersten Welle aufweist, welche durch eine erste Schwingungsebene und eine erste Wellenlänge gekennzeichnet ist;
(b) Aufbringen einer zweiten Lockung auf die in Stufe (a) bereitgestellte Hohlfasermembran in Form einer zweiten Welle, welche durch eine zweite Schwingungsebene und eine zweite Wellenlänge gekennzeichnet ist;
wobei das Aufbringen der Stufe (b) so erfolgt, dass nach dem Aufbringen die erste Schwingungsebene und die zweite Schwingungsebene einen Winkel einschließen, welcher 70 bis 110° beträgt, wobei die erste und die zweite Wellenlänge so ausgewählt werden, dass die erste Wellenlänge kürzer als die zweite Wellenlänge ist und wobei in Stufe (b) die Hohlfasermembran der Stufe (a) durch mindestens zwei sich gegenläufig drehende Zahnräder hindurchgeführt wird, wobei die Drehachsen der Zahnräder nicht senkrecht zur ersten Schwingungsebene ausgerichtet sind.

2. Hohlfasermembran erhalten nach einem Verfahren gemäß Anspruch 1 aufweisend eine erste Lockung in Form einer ersten Welle, welche durch eine erste Schwingungsebene und eine erste Wellenlänge gekennzeichnet ist, und eine zweite Lockung in Form einer zweiten Welle, die durch eine zweite Schwingungsebene und eine zweite Wellenlänge gekennzeichnet ist, wobei die erste Schwingungsebene und die zweite Schwingungsebene einen Winkel miteinander einschließen, welcher 70 bis 110° beträgt und die erste Lockung und die zweite Lockung entlang der Länge der Hohlfasermembran aus periodischen Wellenformen bestehen und die erste und die zweite Wellenlänge unterschiedlich voneinander sind.

3. Hohlfasermembran nach Anspruch 2, wobei der Winkel 85 bis 95° beträgt.

4. Hohlfasermembran nach einem der Ansprüche 2 oder 3, wobei der Winkel 90° beträgt.

5. Hohlfasermembran nach einem der Ansprüche 2 bis 4, wobei die Wellenlänge der ersten Welle im Bereich von 3 bis 15 mm liegt.

6. Hohlfasermembran nach einem der Ansprüche 2 bis 5, wobei die Wellenlänge der zweiten Welle im Bereich von 20 bis 50 mm liegt.

7. Hohlfasermembran nach einem der Ansprüche 2 bis 6, wobei die erste Welle eine erste Amplitude im Bereich von 0,2 bis 0,6 mm aufweist.

8. Hohlfasermembran nach einem der Ansprüche 2 bis 7, wobei die zweite Welle eine zweite Amplitude im Bereich von 2,0 bis 6,0 mm aufweist.

9. Hohlfasermembran nach einem der Ansprüche 2 bis 8, wobei die erste Welle und die zweite Welle sinusförmig sind.

10. Bündel aufweisend Hohlfasermembranen wie in einem der Ansprüche 2 bis 9 definiert.

11. Filtervorrichtung, insbesondere ein Hohlfaserdialysator für die Hämodialyse, aufweisend ein Gehäuse und ein in diesem Gehäuse angeordnetes Bündel wie in Anspruch 10 definiert.

12. Verwendung einer Hohlfasermembran wie in einem der Ansprüche 2 bis 9 definiert, oder Verwendung eines Bündels wie in Anspruch 10 definiert, oder Verwendung einer Filtervorrichtung wie in Anspruch 11 definiert, für die Fluidtrennung.

## Claims

1. A method of making a hollow fiber membrane comprising at least steps (a) and (b):
(a) providing a hollow fiber membrane having a first curl in the form of a first wave **characterized by** a first oscillation plane and a first wavelength;
(b) applying a second curl to the hollow fiber membrane provided in step (a) in the form of a second wave **characterized by** a second oscillation plane and a second wavelength; wherein
the application in step (b) being effected such that, after application, the first oscillation plane and the second oscillation plane confine an angle with one another which is 70 to 110°, wherein the first and second wavelengths are selected such that the first wavelength is shorter than the second wavelength, and wherein in step (b) the hollow fiber membrane of step (a) is passed through at least two counter-rotating cog wheels, wherein the rotation axes of the cog wheels are not aligned perpendicular to the first oscillation plane.

2. A hollow fiber membrane obtained by a method according to claim 1 comprising a first curl in the form of a first wave **characterized by** a first oscillation plane and a first wavelength, a second curl in the form of a second wave **characterized by** a second oscillation plane and a second wavelength, wherein said first oscillation plane and said second oscillation plane confine an angle an angle with one another which is 70 to 110°, and said first curl and said second curl along the length of said hollow fiber membrane consist of periodic waveforms, and said first and second wavelengths are different from each other.

3. Hollow fiber membrane according to claim 2, wherein the angle is from 85° to 95°.

4. Hollow fiber membrane according to claim 2 or 3, wherein the angle is 90°.

5. Hollow fiber membrane according to one of claims 2 to 4, wherein the wavelength of the first wave is from 3 to 15mm.

6. Hollow fiber membrane according to one of claims 2 to 5, wherein the wavelength of the second wave is from 20 to 50 mm.

7. Hollow fiber membrane according to one of claims 2 to 6, wherein the first wave has a first amplitude within the range of 0.2 to 0.6 mm.

8. Hollow fiber membrane according to one of claims 2 to 7, wherein the second wave has a second amplitude within the range from 2.0 to 6.0 mm.

9. Hollow fiber membrane according to one of claims 2 to 8, wherein the first and the second wave are sine shaped.

10. A bundle comprising hollow fiber membranes as defined in one of claims 2 to 9.

11. Filter device, in particular a hollow fiber dialyzer for hemodialysis, comprising a housing and the bundle as defined in claim 10 arranged in said housing.

12. Use of a hollow fiber membrane according to one of claims 2 to 9, or use of a bundle as defined in claim 10, or use of a filter device as defined in claim 11 for fluid separation.

## Revendications

1. Procédé de fabrication d'une membrane à fibres creuses, présentant au moins les étapes (a) et (b) :
(a) fourniture d'une membrane à fibres creuses, laquelle présente une première ondulation sous la forme d'une première onde, laquelle est **caractérisée par** un premier plan d'oscillation et une première longueur d'onde ;
(b) pose d'une seconde ondulation sur la membrane à fibres creuses fournie à l'étape (a) sous la forme d'une seconde onde, laquelle est **caractérisée par** un second plan d'oscillation et une seconde longueur d'onde,
dans lequel la pose de l'étape (b) se réalise de telle sorte qu'après la pose le premier plan d'oscillation et le second plan d'oscillation forment un angle qui va de 70 à 110°, dans lequel la première et la seconde longueurs d'onde sont sélectionnées de telle sorte que la première longueur d'onde soit plus courte que la seconde longueur d'onde et dans lequel à l'étape (b) la membrane à fibres creuses de l'étape (a) est guidée au travers par au moins deux roues dentées tournant en sens inverses, dans lequel les axes de rotation des roues dentées ne sont pas orientés à la verticale du premier plan d'oscillation.

2. Membrane à fibres creuses obtenue selon un procédé selon la revendication 1 présentant une première ondulation sous la forme d'une première onde, laquelle est **caractérisée par** un premier plan d'oscillation et une première longueur d'onde, et une seconde ondulation sous la forme d'une seconde onde qui est **caractérisée par** un second plan d'oscillation et une seconde longueur d'onde, dans laquelle le premier plan d'oscillation et le second plan d'oscillation forment ensemble un angle qui va de 70 à 110° et la première ondulation et la seconde ondulation sont constituées de formes d'onde périodiques le long de la longueur de la membrane à fibres creuses et la première et la seconde longueur d'onde sont différentes l'une de l'autre.

3. Membrane à fibres creuses selon la revendication 2, dans laquelle l'angle va de 85 à 95°.

4. Membrane à fibres creuses selon l'une des revendications 2 ou 3, dans laquelle l'angle est de 90°.

5. Membrane à fibres creuses selon l'une des revendications 2 à 4, dans laquelle la longueur d'onde de la première onde se trouve dans la plage de 3 à 15 mm.

6. Membrane à fibres creuses selon l'une des revendications 2 à 5, dans laquelle la longueur d'onde de la seconde onde se trouve dans la plage de 20 à 50 mm.

7. Membrane à fibres creuses selon l'une des revendications 2 à 6, dans laquelle la première onde présente une première amplitude dans la plage de 0,2 à 0,6 mm.

8. Membrane à fibres creuses selon l'une des revendications 2 à 7, dans laquelle la seconde onde présente une seconde amplitude dans la plage de 2,0 à 6,0 mm.

9. Membrane à fibres creuses selon l'une des revendications 2 à 8, dans laquelle la première onde et la seconde onde sont sinusoïdales.

10. Faisceau présentant des membranes à fibres creuses telles que définies dans les revendications 2 à 9.

11. Dispositif de filtrage, en particulier un dialyseur à fibres creuses pour l'hémodialyse, présentant un logement et un faisceau agencé dans ce logement tel que défini dans la revendication 10.

12. Utilisation d'une membrane à fibres creuses telle que définie dans les revendications 2 à 9, ou utilisation d'un faisceau tel que défini dans la revendication 10, ou utilisation d'un dispositif de filtrage tel que défini dans la revendication 11, pour la séparation de fluide.
